# EUROPÄISCHE PATENTSCHRIFT

(11) **EP 2 429 730 B1**
(45) Veröffentlichungstag und Bekanntmachung des Hinweises auf die Patenterteilung: **30.07.2014**
(21) Anmeldenummer: 10718162.0
(22) Anmeldetag: 05.05.2010
(51) Int. Cl.: B21B 21/04

(54) **VORSCHUBANTRIEB FÜR EINE KALTPILGERWALZANLAGE**
FEED DRIVE FOR A COLD-PILGERING MILL
ENTRAÎNEMENT D'AVANCEMENT POUR LAMINOIR À PAS DE PÈLERIN À FROID

(30) Priorität: 15.05.2009 DE 102009003175
(43) Veröffentlichungstag der Anmeldung: 21.03.2012
(73) Patentinhaber: Sandvik Materials Technology Deutschland GmbH, 40549 Düsseldorf (DE)
(72) Erfinder: FROBÖSE, Thomas, 33775 Versmold (DE)
(74) Vertreter: WSL Patentanwälte Partnerschaft mbB
(86) Internationale Anmeldenummer: PCT/EP2010/056112
(87) Internationale Veröffentlichungsnummer: WO 2010/130613

(56) Entgegenhaltungen:
- DE-A1- 2 401 354
- DE-A1- 4 419 827
- DE-C1- 3 823 134
- US-A- 4 090 386

## Beschreibung

Die vorliegende Erfindung betrifft eine Kaltwalzanlage mit einem Walzgerüst, mindestens einer Walze, die drehbar an dem Walzgerüst befestigt ist, einem Vorschubspannschlitten zum Vorschieben eines Rohlings und einem ersten Antrieb für den Vorschubspannschlitten.

Die vorliegende Erfindung betrifft darüber hinaus ein Verfahren zum Betrieb einer Kaltwalzanlage. Eine gattungsgemässe Vorrichtung sowie ein gattungsgemässes Verfahren sind z.B. aus DE 38 23 134 C1 bekannt.

Zur Herstellung von präzisen Metallrohren, insbesondere aus Stahl, wird ein ausgedehnter hohlzylindrischer Rohling im vollständig erkalteten Zustand durch Druckspannungen kalt reduziert. Dabei wird der Rohling zu einem Rohr mit definiertem reduzierten Außendurchmesser und einer definierten Wanddicke umgeformt.

Das am weitesten verbreitete Reduzierverfahren für Rohre ist als Kaltpilgern bekannt, wobei der Rohling Luppe genannt wird. Die Luppe wird beim Walzen über einen kalibrierten, d.h. den Innendurchmesser des fertigen Rohrs aufweisenden, Walzdorn geschoben und dabei von außen von zwei kalibrierten, d.h. den Außendurchmesser des fertigen Rohrs definierenden, Walzen umfaßt und in Längsrichtung über den Walzdorn ausgewalzt.

Während des Kaltpilgerns erfährt die Luppe einen schrittweisen Vorschub in Richtung auf den Walzdorn zu bzw. über diesen hinweg, während die Walzen drehend über den Dorn und damit die Luppe horizontal hin- und herbewegt werden. Dabei wird die Horizontalbewegung der Walzen durch ein Walzgerüst vorgegeben, an dem die Walzen drehbar gelagert sind. Das Walzgerüst wird in bekannten Kaltpilgerwalzanlagen mit Hilfe eines Kurbelantriebs in einer Richtung parallel zum Walzdorn hin- und herbewegt, während die Walzen selbst ihre Drehbewegung durch eine relativ zum Walzgerüst feststehende Zahnstange erhalten, in die fest mit den Walzenachsen verbundene Zahnräder eingreifen.

Der Vorschub der Luppe über den Dorn erfolgt mit Hilfe eines Vorschubspannschlittens, welcher eine Translationsbewegung in einer Richtung parallel zur Achse des Walzdorns ermöglicht.

Die im Walzgerüst übereinander angeordneten konisch kalibrierten Walzen drehen sich entgegen der Vorschubrichtung des Vorschubspannschlittens. Das von den Walzen gebildete sogenannte Pilgermaul erfaßt die Luppe und die Walzen drücken von außen eine kleine Werkstoffwelle ab, die vom Glättkaliber der Walzen und dem Walzdorn zu der vorgesehenen Wanddicke ausgestreckt wird, bis das Leerlaufkaliber der Walzen das fertige Rohr freigibt. Während des Walzens bewegt sich das Walzegerüst mit den daran befestigten Walzen entgegen der Vorschubrichtung der Luppe. Mit Hilfe des Vorschubspannschlittens wird die Luppe nach dem Erreichen des Leerlaufkalibers der Walzen um einen weiteren Schritt auf den Walzdorn hin vorgeschoben, während die Walzen mit dem Walzgerüst in ihre horizontale Ausgangslage zurückkehren. Gleichzeitig erfährt die Luppe eine Drehung um ihre Achse, um eine gleichmäßige Form des fertigen Rohrs zu erreichen. Durch mehrfaches Überwalzen jedes Rohrabschnitts wird eine gleichmäßige Wanddicke und Rundheit des Rohrs sowie gleichmäßige Innen- und Außendurchmesser erreicht.

Während wie oben beschrieben, die horizontale Hin- und Herbewegung des Walzgerüsts mit Hilfe eines Kurbeltriebs bewirkt wird, wird der lineare Vorschub des Vorschubspannschlittens in den bekannten Kaltpilgerwalzanlagen mit Hilfe eines Kugelgewindetriebs erreicht. Dabei besteht der Kugelgewindetriebe aus einem Servomotor, einem Getriebe, einer Trapezgewindespindel mit zugehörigen Lagerpunkten und entsprechender Schmierung sowie einer Trapezgewindespindelmutter. Der Servomotor ist über eine Kupplung mit dem Getriebe und über eine weitere Kupplung mit der Trapezgewindespindel selbst verbunden. Die Drehbewegung der Gewindespindel wird mit Hilfe der Trapezgewindespindelmutter in eine Translationsbewegung umgesetzt. Dabei ist die Trapezgewindespindelmutter mit dem Vorschubspannschlitten verbunden, so daß sich bei der Drehung der Spindel die Spindelmutter und mit ihr der Vorschubspannschlitten translatorisch in Richtung auf den Walzdorn hin bewegt. Zur Führung des Vorschubspannschlittens sind zusätzlich zu dem Spindelantrieb Führungsschienen vorgesehen, welche die Translationsrichtung des Vorschubspannschlittens vorgeben.

Zur Herstellung präzise gefertigter Rohre ist ein genauer und kontrollierter schrittweiser Vorschub unerläßlich. Daher wird im Stand der Technik ein Spindelantrieb mit kleiner Übersetzung gewählt, welche wiederum eine genaue Positionierung des Vorschubspannschlittens in Translationsrichtung ermöglicht. Die kleine Übersetzung für den Spindelantrieb ist jedoch mit einem Spiel verbunden. Dieses Spiel führt jedoch zu einem erhöhten Verschleiß des Spindelantriebs, so daß in regelmäßigen Abständen der gesamte Spindelantrieb oder zumindest Teile davon ausgetauscht werden müssen. Dieser Austausch erzeugt hohe Montage- und Ersatzteilkosten, wobei auch die Stillstandszeiten der Walzanlage als Folgekosten berücksichtigt werden müssen.

Darüber hinaus verhindert das mit der kleinen Übersetzung des Spindelantriebs verbundene große Spiel, daß der Vorschubspannschlitten langsam verfahren werden kann. Ein solches langsames Verfahren des Vorschubspannschlittens wird jedoch zum Kaltpilgem von Rohren mit kleinen Nenndurchmessem unbedingt benötigt, da es sonst zu Unregelmäßigkeiten bei der Herstellung dieser Rohre mit kleinen Durchmessern kommt.

Das deutsche Patent DE 38 23 134 C1 offenbart daher eine Pilgerwalzanlage, bei welcher der Vorschubantrieb eines jeden der Spannschlitten über einen direkten Linearantrieb in Form eines Linearmotors erfolgt.

Vor diesem Hintergrund liegt der vorliegenden Erfindung die Aufgabe zugrunde, eine gegenüber diesem Stand der Technik verbesserte Kaltwalzanlage bereitzustellen.

Diese Aufgabe wird erfindungsgemäß durch eine Kaltwalzanlage gelöst mit einem Walzgerüst, mindestens einer Walze, die drehbar an dem Walzgerüst befestigt ist, einem Vorschubspannschlitten zum Vorschieben eines Rohlings und einem ersten Antrieb für den Vorschubspannschlitten, wobei der erste Antrieb einen direkten elektromechanischen Linearantrieb aufweist, wobei der erste Antrieb eine Bremse zum Verhindern einer Translationsbewegung des Vorschubspannschlittens aufweist, wobei die Bremse zum Festhalten des Vorschubspannschlittens im statischen Zustand des direkten elektromagnetischen Linearantriebs dient.

Unter einem elektromechanischen Linearantrieb im Sinne der vorliegenden Erfindung werden alle Linearmotoren und Linearaktoren verstanden, die ohne Umsetzung einer Rotationsbewegung in eine Translationsbewegung einen geeigneten Verfahrweg sowie eine ausreichende Positioniergenauigkeit ermöglichen. Dies sind neben Linearmotoren mit elektrodynamischen Wirkprinzip Linearaktoren mit piezoelektrischem, elektrostatischem, elektromagnetischem, magnetrestriktivem oder thermoelektroelektrischem Wirkprinzip.

Ein solcher direkter elektromechanischer Linearantrieb, insbesondere ein Linearmotor, weist den Vorteil auf, daß er direkt auf den Vorschubspannschlitten wirkt sowie berührungslos und somit fast vollständig verschleißfrei arbeitet.

Die Vorschubkräfte werden durch den Linearantrieb direkt in den Vorschubspannschlitten eingebracht. Eine Umsetzung der Rotationsbewegung des Servoantriebs in eine Translationsbewegung über Getriebe, Spindel und Spindelmutter entfällt. So wird auch die Anzahl der mechanischen Komponenten deutlich reduziert, was unter anderem die durch Lagerhaltung von Ersatzteilen entstehenden Kosten reduziert.

Linearantriebe können in sehr kompakter Bauweise konstruiert werden und vermindern daher gegenüber einem herkömmlichen Spindelantrieb die Baugröße der gesamten Walzanlage.

Mit Hilfe des direkten elektromechanischen Linearantriebs sind beliebige Verfahrwege realisierbar sowohl mit kurzen als auch mit langen Verfahrschritten.

Moderne Kaltpilgerwalzanlagen benötigen etwa 300 Vorschubschritte pro Minute, so daß an den Antrieb des Vorschubspannschlittens hohe Anforderungen an die Beschleunigung, die Abbremsung sowie die Vorschubgeschwindigkeit gestellt werden. Diese können von einem direkten elektromechanischen Linearantrieb gut erfüllt werden. Darüber hinaus beträgt der Vorschub pro Vorschubschritt nur etwa 3 mm, so daß eine hohe Positioniergenauigkeit des Antriebs gefordert ist, die mit einem direkten elektromechanischen Linearantrieb reproduzierbar erreicht werden kann.

In einer Ausführungsform der Erfindung ist die Kaltwalzanlage eine Kaltpilgerwalzanlage mit einem kalibrierten Walzdorn und mindestens zwei kalibrierten Walzen, die an dem Walzgerüst drehbar befestigt sind, wobei die Kaltwalzanlage einen zweiten Antrieb für das Walzgerüst aufweist, der das Walzgerüst während des Walzprozesses in Vorschubrichtung des Vorschubspannschlittens vor- und zurückbewegt und wobei die Kaltwalzanlage einen dritten Antrieb aufweist, der den Vorschubspannschlitten und somit die Luppe während des Walzprozesses um eine Achse parallel zur Vorschubrichtung dreht.

In einer weiteren Ausführungsform weist der erste Antrieb für den Vorschubspannschlitten mindestens zwei elektromechanische Linearantriebe auf. Auf diese Weise wird eine ideale Krafteinleitung in den Vorschubspannschlitten in Translationsrichtung erreicht, so daß dieser sich ohne Verkanten gegenüber den Führungen in Translationsrichtung bewegen kann.

In einer Ausführungsform ist der direkte elektromechanische Linearantrieb ein Linearmotor mit Stator und Läufer, der auch als Wanderfeldmaschine bezeichnet wird. Während der Stator entlang des Verfahrwegs des Vorschubspannschlittens angeordnet ist, ist der Läufer am Vorschubspannschlitten selbst befestigt, so daß das sich längs dem Stator bewegende Magnetfeld den Läufer und damit den Vorschubspannschlitten längs des Verfahrwegs zieht.

Die bekannten direkten elektromechanischen Linearantriebe, insbesondere Linearmotoren, sind in der Lage dynamisch, d.h. wenn sich der Läufer in Bewegung befindet, hohe Kräfte auf den Läufer und die damit verbundenen Elemente, in der vorliegenden Erfindung den Vorschubspannschlitten, zu übertragen. Im statischen Fall, d.h. wenn sich der Läufer nicht gegen den Stator bewegt, sinken diese Kräfte jedoch rapide ab. Um dennoch beim Kaltwalzen während des Eingriffs der Walzen die auf die Luppe einwirkenden Kräfte und von dieser auf den Vorschubspannschlitten übertragenen Kräfte aufnehmen zu können, ist es daher vorteilhaft, wenn der erste Antrieb für den Vorschubspannschlitten eine Bremse, insbesondere eine Feststellbremse, zum Verhindern einer Translationsbewegung des Vorschubspannschlittens aufweist. Diese dient zum Festhalten des Schlittens im statischen Zustand des direkten elektromagnetischen Linearantriebs.

Beispiele für eine solche Bremse zur Aufnahme der im statischen Zustand auf den Vorschubspannschlitten einwirkenden Kräfte sind ein mechanisches Bremssystem nach Art einer Trommel- oder Scheibenbremse, eine Rastanordnung nach Art einer mechanische Ratsche oder auch ein dämpfendes pneumatisches oder hydraulisches System, das eine Bewegung des Schlittens zumindest in einer Translationsrichtung verhindert.

Insbesondere ist eine Ausführungsform der Erfindung vorteilhaft, bei der die Bremse eine Translationsbewegung des Vorschubspannschlittens in einer der Vorschubrichtung entgegengesetzten Richtung verhindert, da in dieser Richtung aufgrund der Umdrehungsrichtung der Walzen am Walzgerüst im statischen Zustand die größten Kräfte auf die Luppe bzw. den Vorschubspannschlitten ausgeübt werden.

In einer Ausführungsform der Erfindung ist die Bremse für den Vorschubspannschlitten eine Rücklaufbremse zum Verhindern einer Bewegung des Vorschubspannschlittens in einer der Vorschubrichtung entgegengesetzten Richtung.

In einer weiteren Ausführungsform der Erfindung weist der Vorschubspannschlitten eine Führung auf, die eine elektromagnetische Linearführung ist, so wie sie beispielsweise für Magnetschienenfahrzeuge verwendet wird. Auf diese Weise kann sowohl der Antrieb des Vorschubspannschlittens als auch dessen Führung berührungslos gestaltet werden, was den Verschleiß des Vorschubsystems beinahe vollständig eliminiert.

In einer weiteren Ausführungsform der Erfindung weist der zweite Antrieb für das Walzgerüst ebenfalls einen direkten elektromechanischen Linearantrieb, so wie er oben beschrieben wurde, auf. Auf diese Weise kann auch die Translationsbewegung des Walzgerüsts vor und zurück parallel zur Walzdornachse verschleißfrei mit den oben genannten Vorzügen realisiert werden.

In einer Ausführungsform der Erfindung sind die einzelnen Bewegungen des Vorschubspannschlittens (Vorschub und Rotation der Luppe) sowie die Vor- und Zurückbewegung des Walzgerüsts mit voneinander zunächst unabhängigen Antrieben realisiert. Daher ist es in einer Ausführungsform vorteilhaft, eine Steuerung vorzusehen, welche die einzelnen Antriebe so steuert, daß der Walzprozeß, so wie er zuvor in dieser Anmeldung für den Stand der Technik beschreiben wurde, auf der Anlage ausgeführt werden kann, wobei die Antriebe einzeln und zum richtigen Zeitpunkt angesteuert werden.

Die oben genannte Aufgabe wird auch durch ein Verfahren zum Kaltwalzen eines Rohlingss mit Hilfe mindestens einer Walze gelöst, wobei der Rohling in Richtung der Walze vorgeschoben wird und wobei der Vorschub mit Hilfe eines ersten Antriebs mit mindestens einem direkten elektromagnetischen Linearantrieb bewirkt wird, wobei der erste Antrieb eine Bremse zum Verhindern einer Translationsbewegung des Vorschubspannschlittens aufweist, wobei der Rohling schrittweise vorgeschoben wird und wobei zwischen den Vorschubschritten eine Translationsbewegung des Rohlings in eine zweite der ersten Richtung entgegengesetzten Richtung verhindert wird.

Weitere Vorteile, Merkmale und Anwendungsmöglichkeiten der vorliegenden Erfindung werden anhand der folgenden Beschreibung einer bevorzugten Ausführungsform und der dazugehörigen Figuren deutlich.
Figur 1 zeigt eine Seitenansicht des schematischen Aufbaus einer Kaltpilgerwalzanlage gemäß einer Ausführungsform der vorliegenden Erfindung.
Figur 2 zeigt eine Seitenansicht in Querrichtung des Vorschubspannschlittens einer Kaltpilgerwalzanlage gemäß einer Ausführungsform der vorliegenden Erfindung.
Figur 3 zeigt einen Längsschnitt durch den Vorschubspannschlitten einer Kaltpilgerwalzanlage gemäß einer Ausführungsform der vorliegenden Erfindung.

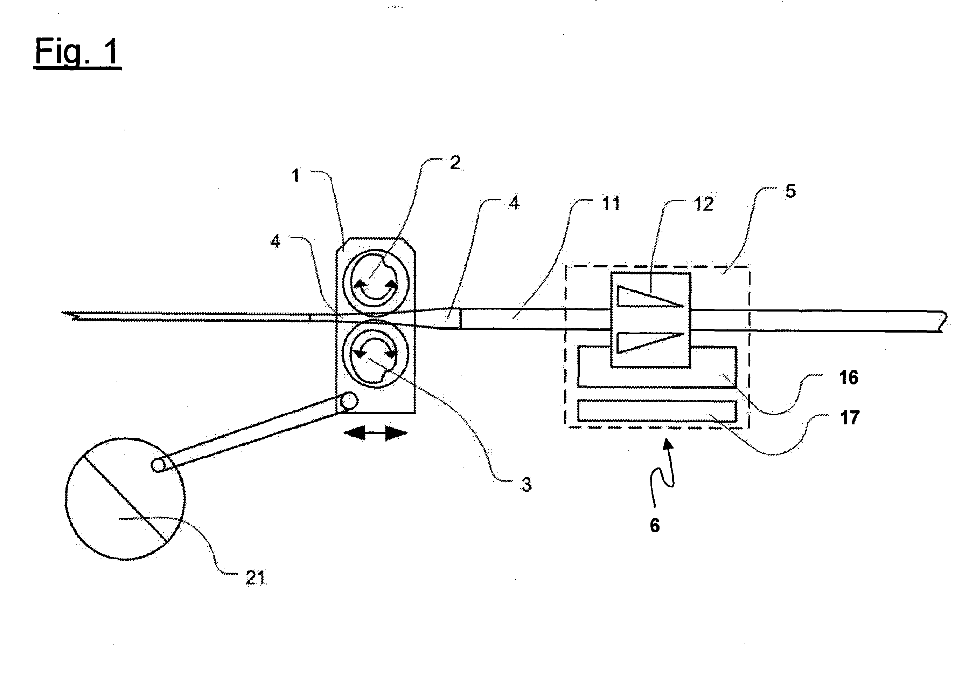

In Figur 1 ist schematisch der Aufbau einer erfindungsgemäßen Kaltpilgerwalzanlage in einer Seitenansicht dargestellt. Die Walzanlage besteht aus einem Walzgerüst 1 mit Walzen 2, 3, einem kalibrierten Walzdorn 4 sowie einem Vorschubspannschlitten 5.

In der dargestellten Ausführungsform weist die Kaltpilgerwalzanlage einen Linearmotor auf, der mit 6 bezeichnet ist. Der Linearmotoren 6 bildet einen Direktantrieb für den Vorschubspannschlitten 5. Der Linearmotor 6 ist aus einem Läufer 16 und einem Stator 17 aufgebaut.

Während des Kaltpilgerns auf der in Figur 1 gezeigten Walzanlage erfährt die Luppe 11 einen schrittweisen Vorschub in Richtung auf den Walzdorn 4 zu bzw. über diesen hinweg, während die Walzen 2, 3 drehend über den Dorn 4 und damit über die Luppe 11 horizontal hin- und herbewegt werden. Dabei wird die Horizontalbewegung-der Walzen 2, 3 durch ein Walzgerüst 1 vorgegeben, an dem die Walzen 2, 3 drehbar gelagert sind. Das Walzgerüst 1 wird mit Hilfe eines Kurbelantriebs 21 in einer Richtung parallel zum Walzdorn 4 hin- und herbewegt, während die Walzen 2, 3 selbst ihre Drehbewegung durch eine relativ zum Walzgerüst 1 feststehende Zahnstange erhalten, in die fest mit den Walzenachsen verbundene Zahnräder eingreifen.

Der Vorschub der Luppe 11 über den Dorn 4 erfolgt mit Hilfe des Vorschubspannschlittens 5, welcher eine Translationsbewegung in einer Richtung parallel zur Achse des Walzdorns ermöglicht. Die im Walzgerüst 1 übereinander angeordneten konisch kalibrierten Walzen 2, 3 drehen sich entgegen der Vorschubrichtung des Vorschubspannschlittens 5. Das von den Walzen gebildete sogenannte Pilgermaul erfaßt die Luppe 11 und die Walzen 2, 3 drücken von außen eine kleine Werkstoffwelle ab, die von einem Glättkaliber der Walzen 2, 3 und dem Walzdorn 4 zu der vorgesehenen Wanddicke ausgestreckt wird, bis ein Leerlaufkaliber der Walzen 2, 3 das fertige Rohr freigibt. Während des Walzens bewegt sich das Walzgerüst 1 mit den daran befestigten Walzen 2, 3 entgegen der Vorschubrichtung der Luppe 11. Mit Hilfe des Vorschubspannschlittens 5 wird die Luppe 11 nach dem Erreichen des Leerlaufkalibers der Walzen 2, 3 um einen weiteren Schritt auf den Walzdorn 4 hin vorgeschoben, während die Walzen 2, 3 mit dem Walzgerüst 1 in ihre horizontale Ausgangslage zurückkehren. Gleichzeitig erfährt die Luppe 11 eine Drehung um ihre Achse, um eine gleichmäßige Form des fertigen Rohrs zu erreichen. Durch mehrfaches Überwalzen jedes Rohrabschnitts wird eine gleichmäßige Wanddicke und Rundheit des Rohrs sowie gleichmäßige Innen- und Außendurchmesser erreicht.

Eine zentrale Ablaufsteuerung steuert die zunächst unabhängigen Antriebe der Walzanlage, so daß der zuvor beschrieben Ablauf des Walzprozesses erzielt wird. Die Steuerung beginnt mit dem Auslösen eines Vorschubschritts der Linearmotoren 6 zum Vorschieben der Luppe 11. Nach Erreichen der Vorschubposition werden die Linearmotoren 6 so angesteuert, daß sie den Vorschubspannschlitten 5 statisch halten. Die Drehgeschwindigkeit des Kurbelantriebs wird so gesteuert, daß gleichzeitig mit dem Vorschubschritt der Linearmotoren 6 das Walzgerüst 1 in seine Ausgangslage zurückgeführt wird, während nach dem Abschluß des Vorschubschritts das Walzgerüst 1 horizontal über der Luppe 11 verschoben wird, wobei die Walzen 2, 3 die Luppe 11 erneut auswalzen. Beim Erreichen des Umkehrpunktes des Walzgerüsts 1 wird der Antrieb des Spannfutters 12 derart angesteuert, daß die Luppe 11 um den Dorn 4 gedreht wird.

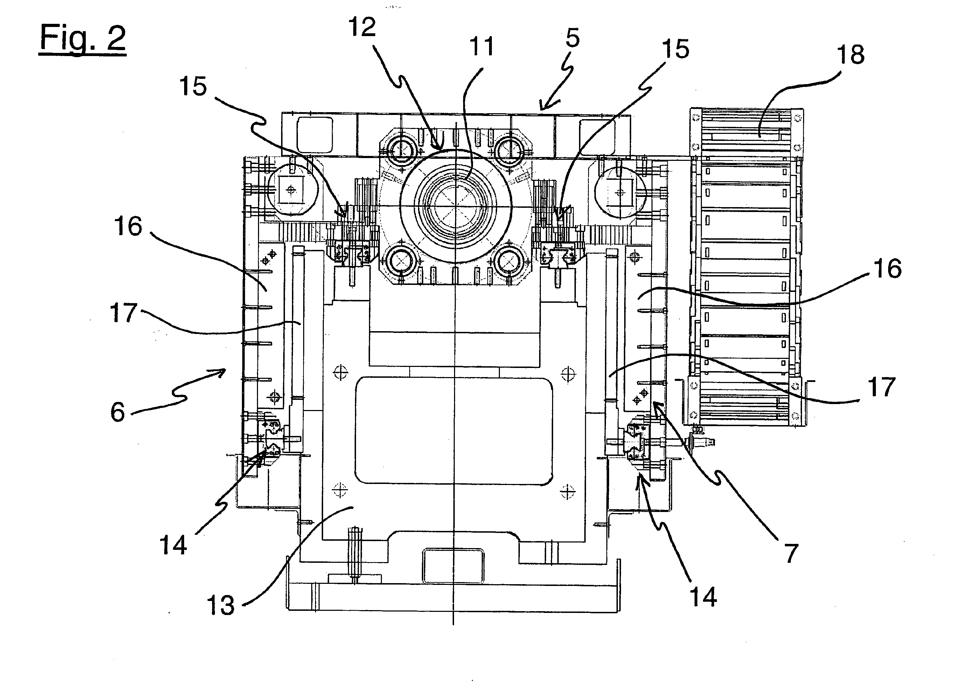

Die Anordnung der Linearmotoren 6, 7 am Vorschubspannschlitten 5 ist in der Querschnittsansicht einer Ausführungsform in Figur 2 gut zu erkennen. Figur 2 zeigt das die Laufbahn für den Vorschubspannschlitten 5 bildende Grundgestell 13, mit dem vier Linearkugelführungen 14, 15 verbunden sind. Dabei sind zwei der Linearführungen 14 an den Seiten des Grundgestells angeordnet, während zwei weitere Linearführungen 15 oben am Grundgestell 13 angeordnet sind, so daß sie die vertikalen Kräfte des Vorschubspannschlittens aufnehmen. Der Vorschubspannschlitten 5 selbst umgreift das Grundgestell 13 nach Art eines U-Profils, wobei die Schenkel des U-Profils von den seitlichen Linearführungen 14 geführt werden, während der Verbindungsabschnitt zwischen den Schenkeln des U-Profils auf den oberen Linearführungen 15 aufliegt.

Zur Aufnahme der Luppe 11 weist der Vorschubspannschlitten 5 Spannfutter 12 auf. Das Spannfutter ist dabei motorisch so angetrieben, so daß es eine Drehung der Luppe während der Vorschubschritte ermöglicht.

Die Linearmotoren 6, 7 sind an den seitlichen Schenkeln des U-förmigen Vorschubspannschlittens 5 angeordnet. Jeder der Linearmotoren 6, 7 weist je einen Stator 17 und einen Läufer 16 auf. Dabei sind die Statoren 17 ortsfest mit dem Grundgestell 13 der Führungsbahn verbunden, während die Läufer 16 mit den Schenkeln des U-förmigen Vorspannschlittens 5 verbunden sind. Auf diese Weise zieht das elektromagnetische Wechselfeld, das von den Statoren 17 erzeugt wird, die Läufer 16 in Längsrichtung an dem Grundgestell 13 entlang. Zur Energiezuführung für die Linearmotoren 6 bis 9 sowie für den die Drehbewegung des Spannfutters 12 bewirkenden Motor ist seitlich am Vorschubspannschlitten 5 eine Kabelschleppkette 18 zur Führung der Übergabe der Stromversorgungskabel von den ortsfesten Teilen der Anlage an den sich bewegenden Vorschubspannschlitten angeordnet.

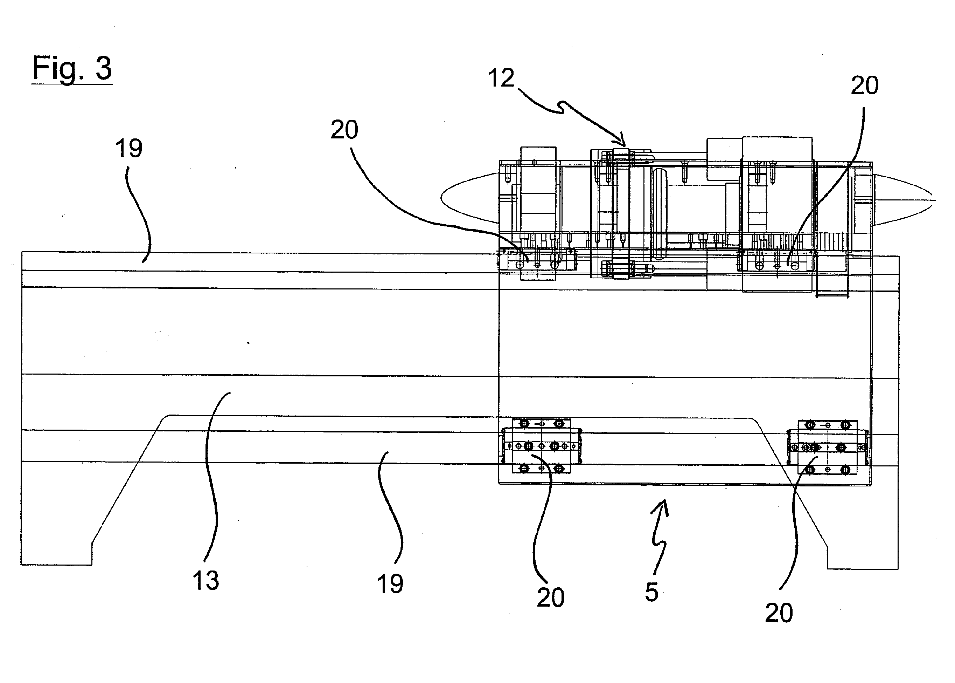

In Figur 3 ist der Vorschubspannschlitten 5 auf dem Fahrbahngrundgestell 13 in einer Seitenansicht schematisch dargestellt. Deutlich ist zu erkennen, daß das Grundgestell 13 Führungsschienen 19 aufweist, die mit entsprechenden an dem Vorschubspannschlitten befestigten Führungen 20 die Linearführungen 14, 15 bilden. Deutlich ist auch das oben auf dem Vorschubspannschlitten angeordnete Spannfutter 12 zur Aufnahme der Luppe zu erkennen.

Für Zwecke der ursprünglichen Offenbarung wird darauf hingewiesen, daß sämtliche Merkmale, wie sie sich aus der vorliegenden Beschreibungen, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen, der hier offenbarten Merkmale und Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarte Ausführungsform beschränkt.

Änderungen an der offenbarten Ausführungsform sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "einer, eine" oder "ein" schließt eine Mehrzahl nicht aus. Die bloße Tatsache, daß bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Walzgerüst
- 2, 3: Walzen
- 4: Walzdorn
- 5: Vorschubspannschlitten
- 6, 7: Linearmotoren

- 11: Luppe
- 12: Spannfutter
- 13: Grundgestell
- 14, 15: Linearführungen
- 16: Läufer
- 17: Stator
- 18: Kabelschleppkette
- 19: Führungsschienen
- 20: Führungen
- 21: Kurbelantrieb

## Patentansprüche

1. Kaltwalzanlage mit
einem Walzgerüst (1),
mindestens einer Walze (2, 3), die drehbar an dem Walzgerüst (1) befestigt ist,
einem Vorschubspannschlitten (5) zum Vorschieben eines Rohlings und
einem ersten Antrieb für den Vorschubspannschlitten (5),
wobei der erste Antrieb mindestens einen direkten elektromechanischen Linearantrieb (6, 7, 8, 9) aufweist.
**dadurch gekennzeichnet, daß** der erste Antrieb eine Bremse zum Verhindern einer Translationsbewegung des Vorschubspannschlittens (5) aufweist, wobei die Bremse zum Festhalten des Vorschubspannschlittens (5) im statischen Zustand des direkten elektromechanischen Linearantriebs (6, 7, 8, 9) dient

2. Kaltwalzanlage nach Anspruch 1, **dadurch gekennzeichnet, daß** sie eine Kaltpilgerwalzanlage ist mit einem kalibrierten Walzdorn (4) und mindestens zwei kalibrierten Walzen (2, 3), die an dem Walzgerüst (1) drehbar befestigt sind, daß sie einen zweiten Antrieb für das Walzgerüst (1) aufweist, der das Walzgerüst während des Walzprozesses in Vorschubrichtung des Vorschubspannschlittens (5) vor und zurück bewegt und daß sie einen dritten Antrieb aufweist, der ein mit dem Vorschubspannschlitten (5) verbundenes Futter (12) während des Walzprozesses um eine Achse parallel zur Vorschubrichtung dreht.

3. Kaltwalzanlage nach Anspruch 1 oder 2, **dadurch gekennzeichnet, daß** der erste Antrieb mindestens zwei direkte elektromechanische Linearantriebe (6, 7, 8, 9) aufweist.

4. Kaltwalzanlage nach einem der Ansprüche 1 bis 3, **dadurch gekennzeichnet, daß** sie eine Führung für den Vorschubspannschlitten aufweist, wobei die Führung eine elektromagnetische Linearführung aufweist.

5. Kaltwalzanlage nach einem der Ansprüche 1 bis 4, **dadurch gekennzeichnet, daß** der zweite Antrieb für das Walzgerüst (1) einen direkten elektromechanischen Linearantrieb aufweist.

6. Kaltwalzanlage nach einem der Ansprüche 1 bis 5, **dadurch gekennzeichnet, daß** sie eine Steuerung aufweist welche die Antriebe so steuert, daß der Walzprozeß auf der Anlage ausgeführt werden kann.

7. Verfahren zum Kaltwalzen eines Rohlings mit Hilfe mindestens einer Walze, wobei, der Rohling in Richtung der Walze vorgeschoben wird, wobei der Vorschub mit Hilfe eines ersten Antriebs mit mindestens einem direkten elektromechanischen Linearantrieb (6, 7, 8, 9) bewirkt wird, **dadurch gekennzeichnet, daß** der erste Antrieb eine Bremse zum Verhindern einer Translationsbewegung des Vorschubspannschlittens (5) aufweist, wobei der Rohling schrittweise in einer ersten Richtung vorgeschoben wird, wobei zwischen den Vorschubschritten eine Translationsbewegung des Rohlings in eine zweite der ersten Richtung entgegengesetzten Richtung verhindert wird.

## Claims

1. A cold rolling mill comprising
a roll stand (1)
at least one roll (2, 3) rotatably mounted to the roll stand (1),
a feed clamping saddle (5) for feeding a blank, and
a first drive for the feed clamping saddle (5),
wherein the first drive comprises at least one direct electromechanical linear drive (6, 7, 8, 9),
**characterized in that** the first drive has a brake for preventing a translatory movement of the feed clamping saddle (5), wherein the brake serves for fixing the feed clamping saddle (5) in the static condition of the direct electromechanical linear drive (6, 7, 8, 9).

2. A cold rolling mill as set forth in claim 1, **characterized in that** it is a cold pilger rolling mill having a calibrated rolling mandrel (4) and at least two calibrated rolls (2, 3) rotatably mounted to the roll stand (1), it has a second drive for the roll stand (1), which moves the roll stand forward and back during the rolling process in the feed direction of the feed clamping saddle (5) and it has a third drive which rotates a chuck (12) connected to the feed clamping saddle (5) about an axis parallel to the feed direction during the rolling process.

3. A cold rolling mill as set forth in claim 1 or 2, **characterized in that** the first drive has at least two direct electromechanical linear drives (6, 7, 8, 9).

4. A cold rolling mill as set forth in one of claims 1 through 3, **characterized in that** it has a guide for the feed clamping saddle, wherein the guide has an electromagnetic linear guide.

5. A cold rolling mill as set forth in one of claims 1 through 4, **characterized in that** the second drive for the roll stand (1) has a direct electromechanical linear drive.

6. A cold rolling mill as set forth in one of claims 1 through 5, **characterized in that** it has a control which controls the drives in such a way that the rolling process can be carried out on the mill.

7. A method of cold rolling a blank by means of at least one roll, wherein the blank is fed in the direction of the roll, wherein the feed is implemented by means of a first drive with at least one direct electromechanical linear drive (6, 7, 8, 9), **characterized in that** the first drive comprises a brake for preventing a translatory movement of the feed clamping saddle (5), wherein the blank is gradually fed in a first direction, wherein between the feed steps a translatory movement of the blank in a second direction opposite to the first direction is prevented.

## Revendications

1. Installation de laminage à froid, comportant une cage de laminoir (1),
au moins un cylindre (2, 3), qui est fixé en rotation à la cage de laminoir (1),
un coulisseau de serrage à l'avance (5), pour faire avancer une pièce brute, et
un premier entraînement pour le coulisseau de serrage à l'avance (5),
le premier entraînement comportant au moins un entraînement linéaire électromécanique direct (6, 7, 8, 9),
**caractérisée en ce que** le premier entraînement comprend un frein pour empêcher un mouvement de translation du coulisseau de serrage à l'avance (5), le frein servant au maintien du coulisseau de serrage à l'avance (5) dans l'état statique de l'entraînement linéaire électromécanique direct (6, 7, 8, 9).

2. Installation de laminage à froid selon la revendication 1, **caractérisée en ce qu'**elle est une installation de laminage à froid à pas de pèlerin, avec un mandrin de laminage calibré (4) et au moins deux rouleaux calibrés (2, 3), qui sont fixés en rotation à la cage de laminoir (1), qu'elle comporte un deuxième entraînement pour la cage de laminoir (1), qui déplace vers l'avant et vers l'arrière la cage de laminoir pendant l'opération de laminage dans la direction d'avance du coulisseau de serrage à l'avance (5), et qu'elle comprend un troisième entraînement, qui fait tourner autour d'un axe parallèle à la direction d'avance une garniture (12), reliée au coulisseau de serrage à l'avance (5), pendant l'opération de laminage.

3. Installation de laminage à froid selon la revendication 1 ou 2, **caractérisée en ce que** le premier entraînement comprend au moins deux entraînements linéaires électromécaniques directs (6, 7, 8, 9).

4. Installation de laminage à froid selon l'une des revendications 1 à 3, **caractérisée en ce qu'**elle comprend un guidage pour le coulisseau de serrage à l'avance, le guidage comportant un guidage linéaire électromagnétique.

5. Installation de laminage à froid selon l'une des revendications 1 à 4, **caractérisée en ce que** le deuxième entraînement pour la cage de laminoir (1) comprend un entraînement linéaire électromécanique direct.

6. Installation de laminage à froid selon l'une des revendications 1 à 5, **caractérisée en ce qu'**elle comprend une commande, qui commande les entraînements de façon que l'opération de laminage puisse être mise en oeuvre sur l'installation.

7. Procédé pour le laminage à froid d'une pièce brute à l'aide d'au moins un cylindre, la pièce brute subissant une avance dans la direction des cylindres, l'avance actionnée à l'aide d'un premier entraînement comportant au moins un entraînement linéaire électromécanique direct (6, 7, 8, 9), **caractérisé en ce que** le premier entraînement comprend un frein pour empêcher un mouvement de translation du coulisseau de serrage à l'avance (5), la pièce brute étant soumise à une avance pas à pas dans une première direction, un mouvement de translation de la pièce brute, dans une deuxième direction, opposée à la première direction, étant empêché entre les pas d'avance.
